# EUROPÄISCHE PATENTANMELDUNG

(11) **EP 4 561 112 A1**
(43) Veröffentlichungstag der Anmeldung: **28.05.2025**
(21) Anmeldenummer: 24213814.7
(22) Anmeldetag: 19.11.2024
(51) Int. Cl.: H04R 25/00, G06F 21/10, G06F 21/33, G06F 21/57, G06F 21/62

(54) **HÖRINSTRUMENTENKONFIGURATIONSSYSTEM**

(30) Priorität: 24.11.2023 DE 102023211756
(71) Anmelder: Sivantos Pte. Ltd., Singapore 539775 (SG)
(72) Erfinder: SCHINKEL-BIELEFELD, Nadja, 91058 Erlangen (DE); HECKEL, Julian, 91058 Erlangen (DE); GÖB, Sebastian, 91058 Erlangen (DE)
(74) Vertreter: FDST Patentanwälte

(57) **Zusammenfassung**

Ein Hörinstrumentenkonfigurationssystem (1) weist eine erste Konfigurationseinheit (2) und eine erste Schnittstelle (4) zur datentechnischen Verbindung der Konfigurationseinheit (2) mit einem Hörinstrument (8) auf. Die erste Konfigurationseinheit (2) ist dabei dazu eingerichtet, über die erste Schnittstelle (4) Konfigurationsdaten aus dem Hörinstrument (8) auszulesen und zur Änderung in dem Hörinstrument (8) zu überschreiben. Das Hörinstrumentenkonfigurationssystem (1) weist außerdem eine zweite Schnittstelle (6) zur Bildung einer mittelbaren oder unmittelbaren datentechnischen Verbindung einer Client-Einheit (18) mit dem Hörinstrument (8) und ein Rechtemanagementmodul (20) auf. Letzteres ist dazu eingerichtet, ein Schreibrecht an den Konfigurationsdaten von der ersten Konfigurationseinheit (2) auf die Client-Einheit (18) zu übertragen oder dieser zu entziehen.

## Beschreibung

Die Erfindung betrifft ein Hörinstrumentenkonfigurationssystem.

Hörinstrumente dienen üblicherweise zur Ausgabe eines Tonsignals an das Gehör des Trägers dieser Hörvorrichtung. Die Ausgabe erfolgt dabei mittels eines Ausgabewandlers, meist auf akustischem Weg über Luftschall mittels eines Lautsprechers (auch als "Hörer" oder "Receiver" bezeichnet). Häufig kommen derartige Hörinstrumente dabei als sogenannte Hörhilfegeräte (auch kurz: Hörgeräte) zum Einsatz. Dazu umfassen die Hörinstrumente normalerweise einen akustischen Eingangswandler (insbesondere ein Mikrophon) und einen Signalprozessor, der dazu eingerichtet ist, das von dem Eingangswandler aus dem Umgebungsschall erzeugte Eingangssignal (auch: Mikrophonsignal) unter Anwendung mindestens eines üblicherweise nutzerspezifisch hinterlegten Signalverarbeitungsalgorithmus derart zu verarbeiten, dass eine Hörminderung des Trägers der Hörvorrichtung zumindest teilweise kompensiert wird. Insbesondere im Fall eines Hörhilfegeräts kann es sich bei dem Ausgabewandler neben einem Lautsprecher auch alternativ um einen sogenannten Knochenleitungshörer oder ein Cochlea-Implantat handeln, die zur mechanischen oder elektrischen Einkopplung des Tonsignals in das Gehör des Trägers eingerichtet sind. Daneben gibt es Hörinstrumente, die das Hörvermögen von normalhörenden Nutzern schützen oder verbessern, zum Beispiel in komplexen Hörsituationen ein verbessertes Sprachverständnis ermöglichen sollen. Solche Geräte werden auch als "Personal Sound Amplification Products" (kurz: PSAP) bezeichnet. Unter den Begriff Hörinstrumente fallen zusätzlich insbesondere auch Geräte wie z.B. sogenannte Tinnitus-Masker, Headsets, Kopfhörer und dergleichen.

Typische Bauformen von Hörinstrumenten, insbesondere Hörgeräten, sind Hinter-dem-Ohr- ("BTE"-) und In-dem-Ohr- ("IdO"- oder"ITE"-) Hörinstrumente. Diese Bezeichnungen zielen auf die bestimmungsgemäße Trageposition ab. So weisen Hinter-dem-Ohr-Hörinstrumente ein (Haupt-) Gehäuse auf, das hinter der Ohrmuschel getragen wird. Hier kann in Modelle unterschieden werden, deren Lautsprecher in diesem Gehäuse angeordnet ist - die Schallausgabe an das Ohr erfolgt dabei üblicherweise mittels eines Schallschlauchs, der im Gehörgang getragen wird - sowie in Modelle, die einen externen Lautsprecher, der im Gehörgang platziert wird, aufweisen. In-dem-Ohr-Hörinstrumente weisen hingegen ein Gehäuse auf, das in der Ohrmuschel oder sogar vollständig im Gehörgang getragen wird.

Insbesondere im Fall von Hörgeräten, aber auch bei anderen Hörinstrumenten, insbesondere aus dem medizinischen Bereich, können üblicherweise Einstellungen (Konfigurationen) - bspw. für den vorgenannten Signalverarbeitungsalgorithmus - an den Nutzer angepasst werden. Im einfachsten Fall handelt es sich dabei um Lautstärkewerte, im Fall von Hörgeräten häufig aber auch um Filtereinstellungen, frequenzabhängige Verstärkungen, Öffnungswinkel eines Richtmikrophons und dergleichen. Hierfür sind bei modernen Hörinstrumenten häufig Schnittstellen vorgesehen, über die ein Datenaustausch mit einer Konfigurationseinheit, bspw. einem Computer oder dergleichen, auf dem eine Konfigurationssoftware installiert ist, ermöglicht wird. Häufig ist jedoch - insbesondere im Fall von Hörgeräten - eine Veränderung von Einstellungen vergleichsweise komplex, da meist mehrere Parameter voneinander abhängen und/oder sich gegenseitig beeinflussen. Aus diesem Grund ist häufig ein Spezialist, bspw. ein Audiologe (auch: "hearing care professional") erforderlich. Häufig verfügt nur dieser über die Konfigurationssoftware und/oder entsprechende Zugriffsrechte auf die Parameter des Hörinstruments.

Der Erfindung liegt die Aufgabe zugrunde, die Vornahme von Einstellungen an einem Hörinstrument zu verbessern.

Diese Aufgabe wird erfindungsgemäß gelöst durch ein Hörinstrumentenkonfigurationssystem mit den Merkmalen des Anspruchs 1. Vorteilhafte und teils für sich erfinderische Ausführungsformen und Weiterentwicklungen der Erfindung sind in den Unteransprüchen und der nachfolgenden Beschreibung dargelegt.

Das erfindungsgemäße Hörinstrumentenkonfigurationssystem weist eine erste Konfigurationseinheit und eine erste Schnittstelle zur datentechnischen Verbindung der Konfigurationseinheit mit einem (insbesondere zu konfigurierenden) Hörinstrument auf. Die erste Konfigurationseinheit ist dabei dazu eingerichtet, über die erste Schnittstelle Konfigurationsdaten aus dem Hörinstrument auszulesen und zur Änderung in dem Hörinstrument zu überschreiben. Das Hörinstrumentenkonfigurationssystem weist außerdem eine zweite Schnittstelle zur Bildung einer mittelbaren oder unmittelbaren datentechnischen Verbindung einer (insbesondere von der Konfigurationseinheit separaten und im bestimmungsgemäßen Einsatzzustand optional auch an einem anderen Ort befindlichen) Client-Einheit mit dem Hörinstrument und ein Rechtemanagementmodul auf. Das Rechtemanagementmodul ist dazu eingerichtet, ein Schreibrecht an den Konfigurationsdaten von der ersten Konfigurationseinheit auf die Client-Einheit zu übertragen oder dieser (d. h. der Client-Einheit) - insbesondere sofern das Schreibrecht bereits der Client-Einheit zugewiesen ist, auch wieder - zu entziehen.

Anders ausgedrückt umfasst das Hörinstrumentenkonfigurationssystem ein Modul zur Vornahme von Einstellungen (die Konfigurationseinheit) an dem Hörinstrument und das Rechtemanagementmodul. Letzteres dient dazu, einem weiteren Modul, nämlich der Client-Einheit, Rechte zur Änderung (Schreibrechte) der Konfigurationsdaten des Hörinstruments zuzuordnen. Dies ist insbesondere bei solchen Fällen von Vorteil, bei denen ein Hörinstrumentenspezialist (z.B. ein Audiologe, Hörgerätetechniker oder dergleichen), während der Vornahme von Einstellungen Unterstützung benötigt. Der Hörinstrumentenspezialist kann in diesem Fall vorteilhafterweise auf einfache Weise Unterstützung auch von einem entfernten Ort einholen, bspw. wenn sich dort ein weiterer, bspw. erfahrenerer, Spezialist befindet.

Gemäß einer zweckmäßigen Ausführung ist das Rechtemanagementmodul dazu eingerichtet, das Schreibrecht in Interaktion mit einem Bediener der ersten Konfigurationseinheit an die Client-Einheit zu übertragen bzw. dieser zu entziehen.

Vorzugsweise handelt es sich bei dem Bediener der ersten Konfigurationseinheit um den Hörinstrumentenspezialisten, der einen Nutzer des Hörinstruments zumindest während einer aktuellen Sitzung (bspw. zur Erstanpassung, zur Änderung an Einstellungen bei Problemen etc.) primär betreut. Diesem Bediener ist also das Recht zugeordnet, zu entscheiden, wem das Schreibrecht übertragen bzw. entzogen werden soll.

Vorzugsweise handelt es sich bei der Konfigurationseinheit um einen Computer oder ein smartes Mobilgerät (Smartphone oder Tablet), auf dem eine Konfigurationssoftware für das Hörinstrument lauffähig installiert ist.

Bei der Client-Einheit handelt es sich optional um eine zweite Konfigurationseinheit, also um einen Computer oder ein smartes Mobilgerät mit darauf installierter Konfigurationssoftware. Optional muss aber auch keine Konfigurationssoftware installiert sein. Die Client-Einheit kann in diesem Fall die Schreibrechte z. B. nach Art eines Fernzugriff über die erste Konfigurationseinheit erhalten.

Gemäß einer weiteren zweckmäßigen Ausführung ist die zweite Schnittstelle dazu eingerichtet, die datentechnische Verbindung zwischen der Client-Einheit und der ersten Konfigurationseinheit aufzubauen. Mit anderen Worten dient die zweite Schnittstelle dazu, dass die Client-Einheit datenübertragungstechnisch an die Konfigurationseinheit angekoppelt wird. Vorzugsweise stehen die erste Konfigurationseinheit und die Client-Einheit dabei in direktem, bspw. kabelgebundenen, gegebenenfalls über ein lokales Netzwerk (z. B. LAN- oder Funk-Netzwerk) vermittelten, Kontakt miteinander. Optional kann die Verbindung zwischen der ersten Konfigurationseinheit und dem Hörinstrument aber auch über das Internet vermittelt werden. Vorzugsweise ist bei dieser Ausführung das Rechtemanagementmodul Teil der ersten Konfigurationseinheit.

Gemäß einer vorteilhaften Weiterbildung umfasst die datentechnische Verbindung der zweiten Schnittstelle eine Bild- und Tonübertragung zwischen der ersten Konfigurationseinheit und der Client-Einheit. Anders ausgedrückt ermöglicht die zweite Schnittstelle Videotelefonie zwischen dem Bediener der ersten Konfigurationseinheit und dem Nutzer der Client-Einheit. Dadurch ist eine besonders direkte Kommunikation zwischen dem Bediener und dem Nutzer im bestimmungsgemäßen Betrieb möglich.

Gemäß einer zweckmäßigen Ausführung weist das Hörinstrumentenkonfigurationssystem einen Server auf, dem die erste und die zweite Schnittstelle sowie eine dritte Schnittstelle zugeordnet sind. In einem bestimmungsgemäßen Betriebszustand sind hierbei das Hörinstrument mittels der ersten Schnittstelle, die Konfigurationseinheit mittels der dritten Schnittstelle und die Client-Einheit mittels der zweiten Schnittstelle jeweils mit dem Server verbunden. Hier sind die erste Konfigurationseinheit und das Hörinstrument also nicht direkt miteinander datenübertragungstechnisch verbunden, sondern die (Konfigurations-) Daten werden über den Server verwaltet und gegebenenfalls auch entsprechend von Eingaben durch den Bediener der ersten Konfigurationseinheit (oder die Client-Einheit) geändert. Das Rechtemanagementmodul ist in diesem Fall dem Server zugeordnet, d. h. in diesen integriert. Der Server kann beispielsweise von einem Hersteller der Konfigurationseinheit und/oder des Hörinstruments betrieben sein. Letzteres ist zweckmäßig, da Hersteller insbesondere von Hörinstrumenten in Form von Hörhilfegeräten üblicherweise eine proprietäre Konfigurationssoftware anbieten (die insbesondere, wenn auf einem Computer oder smarten Mobilgerät installiert, gemeinsam mit diesem die Konfigurationseinheit bildet). Der Betrieb eines Servers, über den die Konfigurationseinheiten mit jeweils - zumindest für eine aktuelle Konfigurationssitzung - zugewiesenen Hörinstrumenten kommunizieren können, ist dabei praktisch, da optional eine erforderliche Rechenleistung auf Seiten der Konfigurationseinheit reduziert werden kann, Updates vergleichsweise einfach aufgespielt werden können und dergleichen.

Gemäß einer weiteren zweckmäßigen Ausführung ist das Rechtemanagementmodul dazu eingerichtet, der Client-Einheit ein Leserecht an den Konfigurationsdaten für die Dauer deren Verbindung über die zweite Schnittstelle dauerhaft zuzuteilen. Das heißt, dass der Nutzer der Client-Einheit für die Dauer der Verbindung zur Konfigurationseinheit die Konfigurationsdaten des mit letzterer verbundenen Hörinstruments ständig einsehen kann. Eine Veränderung ist allerdings an das Schreibrecht gebunden, so dass hierzu die Freigabe des Bedieners der Konfigurationseinheit erforderlich ist. Dies ist beispielsweise für den Fall von Vorteil, dass der Nutzer der Client-Einheit den Bediener überwacht, bspw. während einer Einlernphase, für eine spezifische Unterstützung oder dergleichen.

Gemäß einer weiteren zweckmäßigen Ausführung ist die zweite Schnittstelle ferner dazu eingerichtet, die datentechnische Verbindung mit der Client-Einheit in Abhängigkeit einer Eingabe des Bedieners der Konfigurationseinheit aufzubauen oder zu beenden. Somit kann der Bediener - bildlich als Host der mit dem Nutzer der Client-Einheit gemeinsamen Sitzung - den Nutzer jederzeit zur Teilnahme einladen oder von der Teilnahme ausschließen. Letzteres kann unter anderem hilfreich sein, wenn bspw. der Träger des Hörinstruments private Daten an den Bediener übermitteln will oder muss oder dergleichen.

Gemäß einer wiederum weiteren zweckmäßigen Ausführung ist das Rechtemanagementmodul dazu eingerichtet, der Konfigurationseinheit Schreibrechte an den Konfigurationsdaten für die Dauer, für die die Schreibrechte der Client-Einheit zugewiesen sind, zu entziehen. Somit kann von der Konfigurationseinheit aus keine Änderung an den Konfigurationsdaten vorgenommen werden, sofern die Schreibrechte (noch) bei der Client-Einheit liegen.

Im Rahmen der Erfindung ist es grundsätzlich auch denkbar, dass mehrere Client-Einheiten mit der vorstehend beschriebenen zweiten Schnittstelle in eine Sitzung, während derer zumindest das Hörinstrument mit der Konfigurationseinheit gekoppelt ist, aufgenommen werden. Dies kann beispielsweise für Schulungszwecke genutzt werden, indem nur der Konfigurationseinheit Schreibrechte zugewiesen sind. Den Client-Einheiten sind dabei nur Lese-Rechte zugewiesen, so dass an den Client-Einheiten die Änderungen durch die Konfigurationseinheit "beobachtet" werden können. Optional können auch einer der Client-Einheiten Schreibrechte zugewiesen werden, bspw. wenn sich die schulende Person örtlich nicht bei der Konfigurationseinheit befindet. Diese kann sich in diesem Fall also auch per "remote" zuschalten und trotzdem die Schulung leiten.

In einer optionalen Ausgestaltung kann eine weitere Einheit, bspw. eine weitere Client-Einheit, mittels einer entsprechenden (insbesondere weiteren, bspw. dritten) Schnittstelle in eine Sitzung, während derer zumindest das Hörinstrument mit der Konfigurationseinheit gekoppelt ist, aufgenommen werden. Dieser weiteren Einheit sind vorzugsweise aber keine Lese- und Schreibrechte an den Konfigurationsdaten zugewiesen. Diese weitere Einheit dient insbesondere nur dazu, eine Person, bspw. eine mit einem Nutzer des Hörinstruments verwandte oder eng verbundene Person (bspw. Ehepartner, gute Freunde, Pflegepersonal) mit in die Konfiguration des Hörinstruments mit einbinden zu können (bspw. um Fragen beantworten zu können). Es hat sich nämlich herausgestellt, dass insbesondere vergleichsweise alte Personen oder auch Personen mit einer fortgeschrittenen Hörminderung nicht alle Probleme mit deren Hörleistung und/oder auch der Leistungsfähigkeit des Hörinstruments bemerken und/oder einschätzen können. Eine mit zugeschaltete weitere Person kann dagegen dem Bediener häufig vergleichsweise objektive Einschätzungen liefern.

Grundsätzlich ist es auch denkbar, die Dauer der Zuweisung der Lese- und Schreibrechte an die Konfigurationseinheit und/oder eine der Client-Einheiten zu erfassen und eine von dieser Dauer abhängige Kostenabrechnung vorzuschlagen.

Die Konjunktion "und/oder" ist hier und im Folgenden insbesondere derart zu verstehen, dass die mittels dieser Konjunktion verknüpften Merkmale sowohl gemeinsam als auch als Alternativen zueinander ausgebildet sein können.

Nachfolgend werden Ausführungsbeispiele der Erfindung anhand einer Zeichnung näher erläutert. Darin zeigen:
- Fig. 1: in einer Übersicht schematisch ein Hörinstrumentenkonfigurationssystem in einem bestimmungsgemäßen Betriebszustand, und
- Fig. 2: in Ansicht gemäß Fig. 1 schematisch ein alternatives Ausführungsbeispiel des Hörinstrumentenkonfigurationssystems.

Einander entsprechende Teile sind in allen Figuren stets mit gleichen Bezugszeichen versehen.

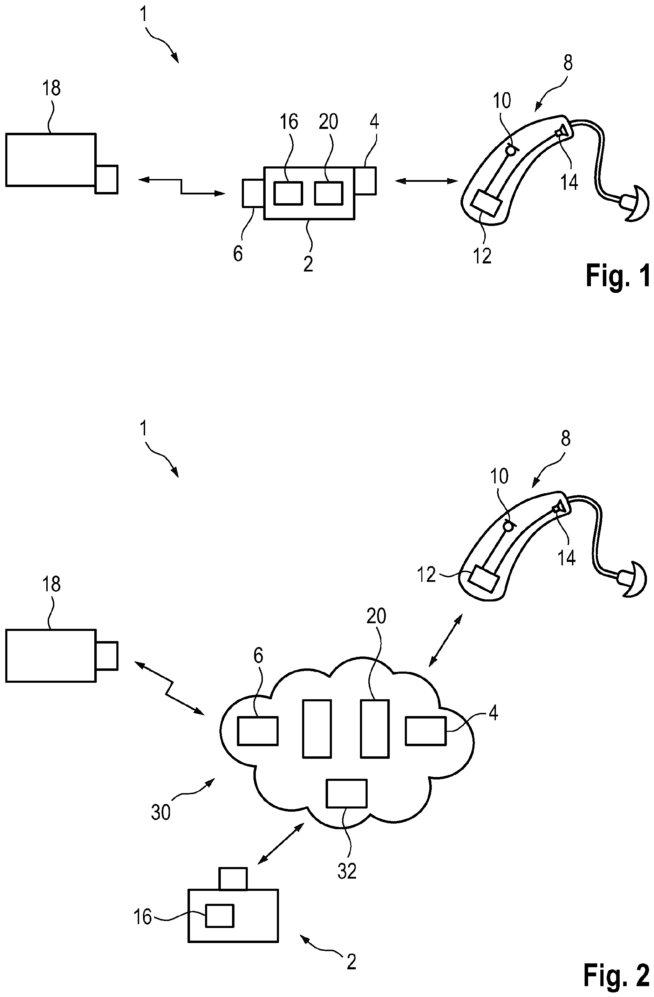

In Fig. 1 ist schematisch ein Hörinstrumentenkonfigurationssystem, kurz: "System 1", dargestellt. Das System 1 weist eine erste Konfigurationseinheit 2 sowie eine erste Schnittstelle 4 und eine zweite Schnittstelle 6 auf. Die erste Schnittstelle 4 ist dazu eingerichtet, in einem bestimmungsgemäßen Betriebszustand (hier dargestellt), eine datentechnische Verbindung (d. h. eine zur Datenübertragung dienende Kommunikationsverbindung) mit einem Hörinstrument - hier in Form eines Hörhilfegeräts, kurz: "Hörgerät 8" - aufzubauen und zu unterhalten.

Das Hörgerät 8 ist zur Versorgung einer Person - im Folgenden: "Hörgeräteträger" - mit einer Hörminderung eingerichtet und vorgesehen und weist dazu ein Mikrophon 10, einen Signalprozessor 12 und einen Lautsprecher 14 auf. Der Signalprozessor 12 ist mittels wenigstens eines konfigurierbaren Signalverarbeitungsalgorithmus zur Verarbeitung von seitens des Mikrophons 10 erfassten Geräuschen - insbesondere frequenzabhängige Filterung, Verstärkung und dergleichen - eingerichtet. Um den Signalprozessor 12 nutzerspezifisch zu konfigurieren, also die Signalverarbeitung an den Hörgeräteträger anzupassen, kann das Hörgerät 8 mittels einer nicht näher dargestellten (hörgeräteeigenen) Schnittstelle über die erste Schnittstelle 4 mit der Konfigurationseinheit 2 verbunden werden. Dadurch können mittels der Konfigurationseinheit 2 Konfigurationsdaten des Signalprozessors 12 ausgelesen und überschreiben (d. h. geändert) werden.

Die Konfigurationseinheit 2 ist im dargestellten Ausführungsbeispiel durch eine Recheneinheit, bspw. ein Computer oder ein smartes Mobilgerät (Smartphone oder Tablet), und eine darauf lauffähig installierte Konfigurationssoftware 16 gebildet. Die Konfigurationseinheit 2 ist dazu eingerichtet und vorgesehen, im bestimmungsgemäßen Betriebszustand einem Bediener (bspw. einem Hörgerätetechniker, einem Audiologen oder dergleichen) eine Möglichkeit zum Auslesen und Überschreiben der Konfigurationsdaten des Signalprozessors 12 des Hörgeräts 8 zu bieten. Dazu weist die Konfigurationseinheit 2 die erste Schnittstelle 4 auf.

Somit ist im bestimmungsgemäßen Betriebszustand das Hörgerät 12 direkt mit der Konfigurationseinheit 2 verbunden.

Für den Fall, dass der Bediener Unterstützung benötigt, kann über die zweite Schnittstelle 6 eine Client-Einheit 18 mit der Konfigurationseinheit 2 datenübertagungstechnisch verbunden werden, bspw. über das Internet. Bei der Client-Einheit 18 kann es sich wiederum um eine Recheneinheit, bspw. einen Computer oder ein smartes Mobilgerät, handeln. Auf der Client-Einheit 18 muss in einer Ausführungsvariante aber keine Konfigurationssoftware 16 vorhanden (installiert) sein. Im vorliegenden Ausführungsbeispiel ist aber die Konfigurationssoftware 16 auf der Client-Einheit 18 installiert. Die datenübertagungstechnische Verbindung zwischen der Konfigurationseinheit 2 und der Client-Einheit 18 ist dabei als Videositzung eingerichtet und vorgesehen. Der Nutzer der Client-Einheit 18 kann bspw. ein weiterer Hörgerätetechniker, Audiologe oder vergleichbarer Spezialist sein. Für eine möglichst weitreichende Unterstützung weist das System 1 ein Rechtemanagementmodul 20 auf. Dieses ist im Ausführungsbeispiel gemäß Fig. 1 in der Konfigurationseinheit 20, bspw. als Softwarebaustein der Konfigurationssoftware 16, verortet.

Das Rechtemanagementmodul 20 ist dazu eingerichtet und vorgesehen, der Client-Einheit 20 Rechte an einer Verbindung zum Hörgerät 8 zu übertragen und zu entziehen. Im Konkreten ist das Rechtemanagementmodul 20 dazu eingerichtet, der Client-Einheit 20 ein Schreibrecht zum Überschreiben (also zur Änderung) der Konfigurationsdaten im Hörgerät 8 (also im Signalprozessor 12) zuzuweisen. Für die Dauer, während der das Schreibrecht der Client-Einheit 18 zugeteilt ist, wird das Schreibrecht der Konfigurationseinheit 2 entzogen, so dass Änderungen stets nur von einem Gerät aus vorgenommen werden können.

Das Rechtemanagementmodul 20 ist dazu eingerichtet, das Schreibrecht nur in Interaktion mit dem Bediener der Konfigurationseinheit 2 zu vergeben und auch wieder zu entziehen. Leserechte an den Konfigurationsdaten des Signalprozessors 12 sind der Client-Einheit 18 in diesem Ausführungsbeispiel aber für die Dauer der Verbindung mittels der zweiten Schnittstelle 6 dauerhaft zugeteilt, so dass der Nutzer der Client-Einheit 18 ständig die aktuellen Einstellungen des Hörgeräts 8 einsehen kann. Optional kann der Nutzer der Client-Einheit 18 auch aktuelle Änderungen, die der Bediener der Konfigurationseinheit 2 vornimmt einsehen.

In Fig. 2 ist ein alternatives Ausführungsbeispiel des Systems 1 dargestellt. Das System 1 weist hierbei zusätzlich zu den vorstehend beschriebenen (und hier teilweise abgewandelten Elementen) einen Server, hier konkret einen Cloud-Server 30, auf. In dem Cloud-Server 30 sind die beiden Schnittstellen 4 und 6 realisiert sowie eine weitere (dritte) Schnittstelle 32. Mittels dieser dritten Schnittstelle 32 kann die Konfigurationseinheit 2 mit dem Cloud-Server 30 datenübertragungstechnisch verbunden werden. Der Cloud-Server 30 dient dabei zur Datenverteilung von der Konfigurationseinheit 2 zum Hörgerät 8 und zur Client-Einheit 18. Außerdem ist im dargestellten Ausführungsbeispiel das Rechtemanagementmodul 20 im Cloud-Server 30 ausgebildet, so dass das vorstehend beschriebene Rechtemanagement über den Cloud-Server 30 erfolgt.

Der Gegenstand der Erfindung ist nicht auf das vorstehend beschriebene Ausführungsbeispiel beschränkt. Vielmehr können weitere Ausführungsformen der Erfindung von dem Fachmann aus der vorstehenden Beschreibung abgeleitet werden.

### Bezugszeichenliste

- 1: System
- 2: Konfigurationseinheit
- 4: Schnittstellt
- 6: Schnittstelle
- 8: Hörgerät
- 10: Mikrophon
- 12: Signalprozessor
- 14: Lautsprecher
- 16: Konfigurationssoftware
- 18: Client-Einheit
- 20: Rechtemanagementmodul
- 30: Cloud-Server
- 32: Schnittstelle

## Patentansprüche

1. Hörinstrumentenkonfigurationssystem (1), aufweisend
- eine erste Konfigurationseinheit (2),
- eine erste Schnittstelle (4) zur datentechnischen Verbindung der Konfigurationseinheit (2) mit einem Hörinstrument (8), wobei die erste Konfigurationseinheit (2) dazu eingerichtet ist, über die erste Schnittstelle (4) Konfigurationsdaten aus dem Hörinstrument (8) auszulesen und zur Änderung in dem Hörinstrument (8) zu überschreiben,
- eine zweite Schnittstelle (6) zur Bildung einer mittelbaren oder unmittelbaren datentechnischen Verbindung einer Client-Einheit (18) mit dem Hörinstrument (8), und
- ein Rechtemanagementmodul (20), das dazu eingerichtet ist, ein Schreibrecht an den Konfigurationsdaten von der ersten Konfigurationseinheit (2) auf die Client-Einheit (18) zu übertragen oder dieser zu entziehen.

2. Hörinstrumentenkonfigurationssystem (1) nach Anspruch 1,
wobei das Rechtemanagementmodul (20) dazu eingerichtet ist, das Schreibrecht in Interaktion mit einem Bediener der ersten Konfigurationseinheit (2) zu übertragen bzw. zu entziehen.

3. Hörinstrumentenkonfigurationssystem (1) nach Anspruch 1 oder 2,
wobei es sich bei der Client-Einheit (18) um eine zweite Konfigurationseinheit, einen Computer oder ein smartes Mobilgerät handelt.

4. Hörinstrumentenkonfigurationssystem (1) nach einem der Ansprüche 1 bis 3, wobei die zweite Schnittstelle (6) dazu eingerichtet ist, die datentechnische Verbindung zwischen der Client-Einheit (18) und der Konfigurationseinheit (2) aufzubauen.

5. Hörinstrumentenkonfigurationssystem (1) nach Anspruch 4,
wobei die datentechnische Verbindung der zweiten Schnittstelle (6) eine Bild- und Tonübertragung zwischen der ersten Konfigurationseinheit (2) und der Client-Einheit (18) umfasst.

6. Hörinstrumentenkonfigurationssystem (1) nach einem der Ansprüche 1 bis 3, aufweisend einen Server (30), dem die erste und die zweite Schnittstelle (4, 6) sowie eine dritte Schnittstelle (32) zugeordnet sind, wobei in einem bestimmungsgemäßen Betriebszustand das Hörinstrument (8) mittels der ersten Schnittstelle (4), die Konfigurationseinheit (2) mittels der dritten Schnittstelle (32) und die Client-Einheit (18) mittels der zweiten Schnittstelle (6) jeweils mit dem Server (32) verbunden sind, und wobei das Rechtemanagementmodul (20) dem Server (30) zugeordnet ist.

7. Hörinstrumentenkonfigurationssystem (1) nach einem der Ansprüche 1 bis 6, wobei das Rechtemanagementmodul (20) dazu eingerichtet ist, ein Leserecht an den Konfigurationsdaten der Client-Einheit (18) für die Dauer deren Verbindung über die zweite Schnittstelle (6) dauerhaft zuzuteilen.

8. Hörinstrumentenkonfigurationssystem (1) nach einem der Ansprüche 1 bis 7, wobei die zweite Schnittstelle (6) dazu eingerichtet ist, die datentechnische Verbindung mit der Client-Einheit (18) in Abhängigkeit einer Eingabe des Bedieners der Konfigurationseinheit (2) aufzubauen oder zu beenden.

9. Hörinstrumentenkonfigurationssystem (1) nach einem der Ansprüche 1 bis 8, wobei das Rechtemanagementmodul (20) dazu eingerichtet, der Konfigurationseinheit (2) Schreibrechte an den Konfigurationsdaten für die Dauer, für die die Schreibrechte der Client-Einheit (18) zugewiesen sind, zu entziehen.
